(19) Europäisches Patentamt
European Patent Office
Office européen des brevets

(11) **EP 4 683 247 A1**

(12) **EUROPEAN PATENT APPLICATION**

(43) Date of publication:
**21.01.2026 Bulletin 2026/04**

(21) Application number: **24189777.6**

(22) Date of filing: **19.07.2024**

(51) International Patent Classification (IPC):
**H04B 7/185** (2006.01)

(52) Cooperative Patent Classification (CPC):
**H04B 7/18517; H04B 7/1851; H04B 7/18513**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ST Engineering iDirect (Europe) Cy NV
9100 Sint-Niklaas (BE)**

(72) Inventors:
• **DUYCK, Dieter**
  **9100 Sint-Niklaas (BE)**
• **DELARUELLE, Daniel**
  **9100 Sint-Niklaas (BE)**
• **VERMEULEN, Eli**
  **9140 Temse (BE)**

(74) Representative: **Winger
Mouterij 16 bus 101
3190 Boortmeerbeek (BE)**

(54) **SATELLITE TRANSMITTER AND COMMUNICATION SYSTEM**

(57)    The present invention relates to a radio unit for a satellite communication system. The radio unit is arranged for transmitting a waveform which bears data symbols on at least one carrier. The waveform is a non-slotted signal of at least 30 seconds. The transmitter is arranged for ramping up or down the power of the waveform to be transmitted to a target power value according to a predefined power profile by adjusting at least one variable gain setting. The radio unit is part of a transmitter, which can be a single-carrier transmitter or a multicarrier transmitter. The invention also relates to a satellite communication system comprising such a transmitter.

Fig.5

**Description**

**Field of the invention**

The present invention is generally related to the field of satellite communication. More in particular, the invention relates to a satellite communication system wherein a plurality of transmitters communicates via satellite with a plurality of receive terminals.

**Background of the invention**

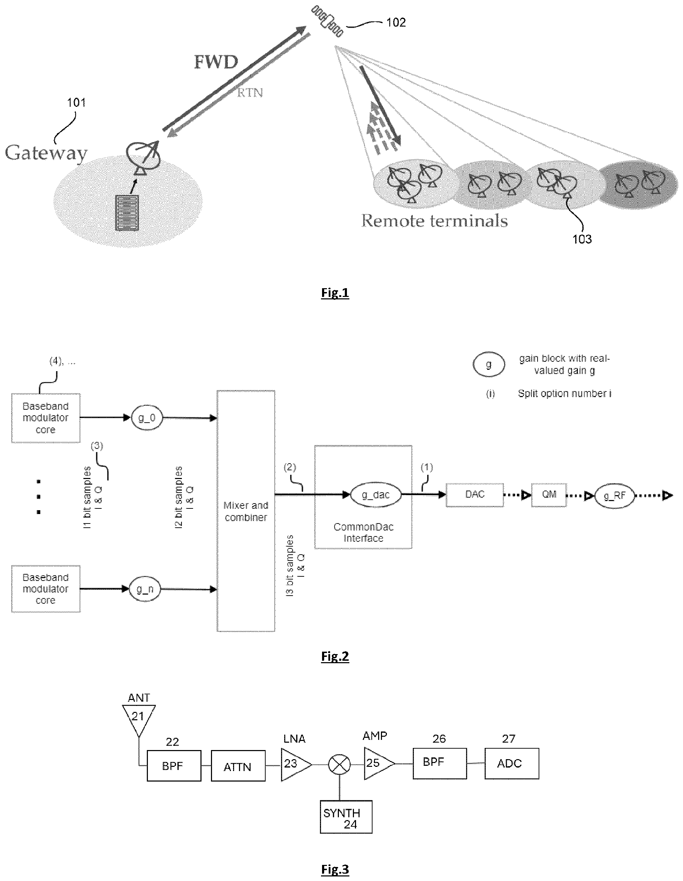

Satellite communication services are important in various fields since many decades. One-way and two-way communication services can be considered. In two-way satellite communication services, there is a link from a hub (also named gateway) to a terminal, called the forward link, and a link from the terminal to the hub, called the return link. In a one-way service, only the forward link is used. A typical satellite two-way communication network is illustrated in Fig.1. A hub or gateway (101) communicates with a terminal (103) via at least one satellite (102). In such a system multiple terminals may be covered through a single hub. A satellite communication service may contain several hubs. A hub may contain several transmitters and/or receivers, e.g. if the bandwidth needed in the forward link or return link is larger than the bandwidth that can be transmitted from a single transmitter or received by a single receiver.

The transmitter output in a digital communication system, particularly in a satellite communication system, can be seen as a transmit signal which is a pulse train modulated by a sequence of complex-valued symbols. The modulation typically comprises applying the symbols to a pulse shaping filter (PSF). Each symbol is an encoded version of some information bits and is selected (in a process referred to as mapping) from an allowed set of complex-valued points, represented by an in-phase and quadrature component (I and Q, respectively). The set of possible points is called a constellation. Several mapping strategies can be envisaged in satellite communications, including quadrature amplitude modulation (QAM), phase shift keying (PSK) and amplitude and phase shift keying (APSK). These mapping strategies employ different types of constellations. For example, in an APSK mapping scheme the constellation points are located on two or more concentric rings. The combination of a constellation and a forward error correcting code (FEC) is referred to as a *modulation and coding* or a *modcod.* As different prior art documents often use other notations to denote the same physical entity, the notation is explicitly recalled here. The complex (I,Q) values provided to the PSF are referred to as transmit symbols. A complex baseband waveform is obtained as the superposition of pulses of essentially finite duration, each pulse being the product of a complex-valued symbol with a delayed instance of a pulse known as the transmit filter impulse response. The output of the PSF is denoted as the single-carrier transmit signal. The single carrier transmit signal is the output of a single carrier baseband modulator core, which comprises a PSF, an encoder and a mapper. A complex-valued baseband single carrier waveform is obtained by converting the digital single carrier transmit signal to the analog domain by means of digital-to-analog converter (DAC). The radio frequency single carrier waveform is obtained from the complex-valued baseband single carrier waveform by I/Q modulation and frequency up-conversion. Before transmission, the radio frequency (RF) single carrier waveform is amplified by the ground station high power amplifier (HPA). The high-power amplification may in certain implementations be realized in two or more amplification stages.

The above digital communication system is a single-carrier communication system. In a multicarrier communication system, multiple single carrier waveforms can be combined on an analog level (i.e., by combining single carrier waveforms after the DAC or after the upconversion), or multiple single carrier transmit signals can be combined on a digital level, resulting in a digital multicarrier signal which is then converted to analog by the DAC (see Fig.2 for the latter case). The latter case is referred to as a multicarrier modulator in the following. A multicarrier modulator may be preferred as it can send multiple carriers from a single modulator, which lowers the costs (capital expenditures when the modulator is purchased or operational expenditures when it is rented) compared to single-carrier modulators.

An exemplary block diagram of a multicarrier modulator explaining a level plan is shown in the conceptual scheme of Fig.2. In this example N baseband single carrier modulator cores in parallel are used that each generate a stream of IQ samples representing a single carrier transmit signal. The single carrier transmit signal is represented by I1 bits, e.g., I1 = 12. There is typically a baseband single carrier modulator core per single carrier transmit signal. Before combining several single carrier transmit signals into one multicarrier transmit signal, each single carrier transmit signal can be scaled by means of one of the (real-valued) gains $g_i$ called mixer gains, to an appropriate level to reflect the correct differences in power between the different carriers. For example, if a first carrier requires four times the power of a second carrier, the root mean square (RMS) level of the first carrier should be twice as high as the RMS level of the other carrier. In order to minimize the quantization noise and local oscillator (LO) spur levels, the digital levels (i.e., the RMS levels of the digital signals before the common digital to analogue converter (DAC)) are typically maximized, while still backing off from the maximum value sufficiently to avoid any clipping. It is to be noted that the quadrature modulator (i.e., the I/Q modulator) produces a remanent LO spur at the Phase Lock Loop (PLL) LO synthesizer frequency. The spur is undesired and should have the lowest possible power. The spur level is attenuated by the voltage-controlled amplification. Operating at maximum digital power (while still avoiding clipping) is therefore best practice, as it leads to the highest possible attenuation of the voltage-controlled amplifier (VCA)) to get the requested analog power of the RF signal and this highest attenuation keeps the spur at the lowest level. In the scheme illustrated in Fig.2 a common gain $g_{dac}$ is applied in the DAC. Again, this gain does not need to be performed explicitly. It can for example be absorbed in the per carrier gains $g_i$. Alternatively, it may consist of a plurality of gains which together define a total common gain. Then, after the DAC and quadrature modulation (QM), the desired output power is obtained by attenuating the analog waveform with a gain value $g_{RF}$ (e.g., by means of the VCA). Hence, $g_{RF}$ is typically smaller than 1. After $g_{RF}$ there are typically other gains in the uplink RF chain of the gateway or terminal, e.g. due to splitters and ultimately the high-power amplifier which is typically located at the antenna.

Fig.3 represents a high-level block scheme of a front-end circuit of a typical receiver. The front-end circuit converts the incoming waveform, i.e., the received signal, to a sequence of digital samples at a baseband frequency. The figure illustrates an input stage comprising an antenna 21, a band pass filter (BPF) 22 and a low noise amplifier (LNA) 23. The BPF isolates the desired signal from the RF signal the antenna takes in. The weak desired signal is amplified in the LNA and converted to a baseband frequency by a frequency synthesizer 24. The resulting signal is fed to a variable gain amplifier 25 that provides a scaling of the incoming signal in the analog domain. Next band pass filtering 26 is performed before applying the signal to an analog-to-digital converter (ADC) 27. The scaling of the incoming signal is such that the full dynamic range of the ADC is utilized as good as possible, while minimizing the probability of clipping. The block diagram of Fig.3 shows just one possible receiver implementation and many variations exist to receive a signal. For example, variable gain amplifier 25 can be absorbed in the LNA 23.

With the concise description of the transmitter and receiver side of a satellite communication system given above, one of the problems tackled by the invention can now be explained.

A Medium Earth Orbit (MEO) satellite constellation is assumed. A hub and terminal transmit data by means of a single carrier. The connection between a hub and a terminal then needs to be regularly handovered to a new satellite (i.e., from the setting satellite to the rising satellite), e.g., every 40 minutes for a particular MEO orbit. This is ideally performed in a make before break (MBB) fashion, but it can also be performed in a break before make (BBM) fashion. The single carrier over the 'setting' satellite is denoted carrier 1 and the single carrier over the 'rising' satellite carrier 2. This carrier 2 may come from a same modulator as carrier 1 or from a different modulator. During handover, both the setting and the rising satellite are 'in sight' of the gateway and the multiple terminals. In a make before break scenario, first a lock is achieved on the rising satellite (so, on carrier 2) before transitioning the traffic from carrier 1 to carrier 2 and next stopping the transmission of carrier 1. Carriers 1 and 2 thus have a different central frequency and do not overlap in frequency. This handover can occur gradually for all terminals. E.g., all terminals have five minutes for the handover and each terminal gets a window of 20 seconds to realize the handover. Also, the handover of the forward and return link can happen independently from each other. In a BBM scenario, the traffic over carrier 1 is stopped before lock is achieved on carrier 2. There will thus be a short interrupt of the connection. The enabling of carrier 2 has an impact on the tracking in the receiver of carrier 1 if carrier 2 is nearby to carrier 1 in frequency. Similarly, the enabling of carrier 2 can have an impact on the tracking in the receiver of another carrier if that other carrier is nearby in frequency. More generally, the enabling of carrier 2 has an impact on the tracking in the receivers of other carriers, typically close in frequency to carrier 2. Also similarly, the disabling of carrier 1 has an impact on the tracking in the receivers of other carriers, typically close in frequency to carrier 1.

The sketched problem is not limited to satellite handover. It may as well occur in a so-called mid-pass handover. In the case of MBB capability, MBB can also be used to dynamically change the carrier size. Such a change in carrier size may be efficient to make the carrier for a first service (which is congested) wider (so coming with more capacity for the congested service to alleviate the congestion) and the carrier for another service (which is not congested and thus can live with a lower capacity) smaller. In mid-pass handovers this is performed during the pass (e.g., in the middle of a pass) of a MEO satellite. Again, it is noted that the enabling (or disabling, see below) of carrier 2 has an impact on the tracking in the receiver of other (typically nearby in frequency) carriers. The change in carrier sizes can also be done on other orbits, e.g. for GEO orbits. But it is a feature that typically requires no service interruption and therefore requires MBB capabilities, which are more likely to be available in a system communicating over non-geostationary (NGSO) orbits such as MEO. Hence, while the problem can occur in all orbits, it will probably occur more in systems communicating over NGSO orbits.

As explained above, the sketched problem is not limited to a MBB scenario or to a scenario where only two carriers are involved. Consider the following example. Two 100 MHz carriers, denoted carrier1a and carrier 1b, of a transmitter are assumed to move at handover to carrier 1b and carrier 2b, respectively. If one has for example the following configuration :

Carrier 1a: 1.2 GHz / Carrier 2a: 1.6 GHz / Carrier 1b: 1.7 GHz / Carrier 2b: 1.3 GHz then enabling or disabling carrier 2b has most impact on carrier 1a and enabling or disabling carrier 2a on carrier 1b as they are nearby in frequency. Hence, in this example a carrier is affected by a carrier involved in a different handover operation. Such a situation may thus occur in a brake before make context as well.

As also touched upon above, it was found that the problem arises not only when an adjacent or nearby carrier is enabled, but also upon the sudden disabling of an adjacent or nearby carrier. So, the problem with the tracking in the receiver of the carrier of interest in general occurs when an adjacent or nearby carrier is 'suddenly' enabled or disabled or even more generally, in the case of 'sudden' significant power variations of a nearby carrier. The problem is thus more relevant to "new space" (i.e., multi-orbit and/or flexible satellite) scenarios where carriers come and go more quickly or where carriers change power more quickly than in more conventional satellite systems.

If the adjacent or nearby carrier that is enabled or disabled or significantly changes power, is much larger in symbol rate or bandwidth than the carrier of interest, the tracking of the carrier of interest is more strongly affected. For instance, carrier 2 can have a symbol rate of 100 Mbaud but can be adjacent to the carrier of interest (e.g. carrier 1) of 5 Mbaud for instance. Even in the case of both carriers having the same power spectral density (PSD), the power of carrier 2 is still 20 times of 13 dB larger.

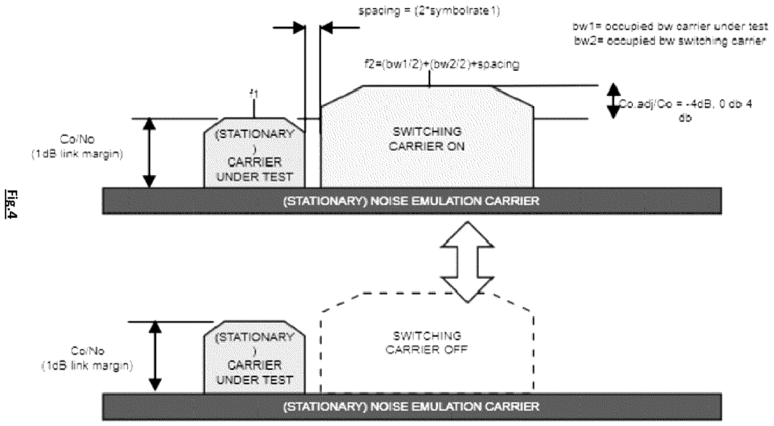

A concrete example based on measurements is now described to illustrate even more clearly the problem at hand. Reference is made to Fig.4. One carrier (10) is a stationary carrier of interest. A symbol rate for the carrier of interest of 14 Mbaud was tested. Next to the carrier of interest (10), an adjacent carrier (12) is present that can be suddenly switched on or off. The adjacent carrier can be transmitted by the same modulator as the carrier of interest or by another modulator. Several power levels are tested such that the power spectral density (PSD) difference, defined as $10*log10(PSD\_Adj/PSD\_Int)$ (with PSD_Int the power spectral density of the carrier of interest and PSD_Adj that of the adjacent carrier) between both carriers is -4 dB (i.e., the PSD of the adjacent carrier is 4 dB lower than the carrier of interest), 0 dB (PSD_Adj is equal to PSD_Int) or 4 dB (PSD_Adj is 4 dB higher than PSD_Int). In the measurement the carrier of interest and the adjacent carrier are taken to be DVB-S2X carriers with a roll-off factor of 5%, normal frames, pilots on. The noise level is set such that the SNR is 1 dB above the Quasi Error Free (QEF) threshold of the used modcod, so there is 1 dB link margin.

The following behaviour was noticed. With -4 dB PSD difference, packet loss in the receiver of the carrier of interest occurred for

    o adjacent symbol rates of 200 Mbaud and higher for 8-PSK modcods in the carrier or interest,
    o adjacent symbol rates of 300 Mbaud and higher for 16-APSK, 64-APSK and 256 APSK modcods.

    With 0 dB PSD difference packet loss in the receiver of the carrier of interest occurred for

        o adjacent symbol rates of 90 Mbaud and higher for 8-PSK modcods in the carrier or interest,
        o adjacent symbol rates of 200 Mbaud and higher for 16-APSK modcods in the carrier or interest,
        o adjacent symbol rates of 100 Mbaud and higher for 64-APSK and 256 APSK modcods in the carrier or interest

    Finally, with 4 dB difference packet loss in the receiver of the carrier of interest occurred for adjacent symbol rates of 90 Mbaud and higher, for all modcods in the carrier of interest.

Analysis of the problem as set out above suggests that the impact on the tracking behaviour is probably due to the fact that the automatic gain control (AGC) of amplifier 25 in Fig.3 gets hits in that case. Indeed, a part of the AGC works on the total power seen in a band around the carrier of interest (i.e., passed by the first bandpass filter 22 in the tuner, e.g. within its L-band). In the case of 'sudden' enabling/disabling of one or more adjacent carriers, especially if the adjacent carriers are (much) wider in size, the amount of total power may suddenly vary. As the AGC is a bit slower, a time period may be created wherein the power of the IQsymbols of the carrier of interest are not normalized (i.e., too low or too high) in the demodulator of the carrier of interest, resulting in too many errors.

Prior art solutions to this problem are mainly focussed on modifying the AGC operation. For example, in patent document US9490764 B2 fast AGC for packet-based systems is discussed, more in particular a method to reduce the AGC convergence time at a receiver. The RF signal includes a sequence of a plurality of pre-defined power levels at a beginning of a preamble of the RF signal. Statistics for each of the plurality of pre-defined power levels at the beginning of the preamble of the RF signal are computed, e.g. signal power, signal amplitude, signal RMS value etc... Then an appropriate gain for a variable gain amplifier (VGA) is computed. Hence, the impact of an adjacent carrier is not at all considered in the document. Furthermore, there is an interest to use a receiver with a standard AGC to limit the complexity or work with common off-the-shelf components.

Another problem that requires attention is the following. With the arrival of cloud computing and more affordable and powerful general purpose processing units (e.g. on CPU, possibly accelerated by GPU or FPGA), more and more of the baseband processing is performed on a server instead of on FPGAs. Through a digital interface protocol (such a (enhanced) Common Public Radio Interface ((e)CPRI) or Digital Intermediate Frequency Interoperability (DIFI)) the so generated digital transmit signal (single carrier or multicarrier) is then transferred to a radio unit or digitizer that then further converts the digital transmit signal to an analog waveform and/or vice versa. A digitizer or radio unit comprises a DAC and/or ADC and a quadrature modulator. In such case, the physical layer of the communication system is spread over two parts, the baseband processing part in the server and the conversion to analog and the analog processing in the digitizer or radio unit. Next to the trend towards cloud and general purpose computing, gateways also become more digital and there is an interest to go to the analog domain only as close as possible to the antenna. So even when most of the baseband processing is carried out still on an FPGA based device, the digital transmit signal is still output digitally through a digital interface protocol. Then, directly, or via several switches, that digital transmit signal arrives at a digitizer or radio unit, typically close to the antenna where the data stream is then converted to an analog waveform. Also in that case, the physical layer of the communication system is spread over more than one device. When changing a power value of a carrier, several gains require configuration. In case gains are spread over different devices, it may happen that first one gain change impacts the waveform's power and only later another gain change impacts the waveform's power to reach the finally desired target waveform power. After the first gain change but before the second gain change, the waveform thus has a wrong power value. This issue requires a solution.

Hence, there is a need for a satellite communication system that is configured to deal with the impact of one or more adjacent carriers on a carrier of interest. Further, there is a need for a satellite communication system that can seamlessly change the power when the baseband processing is spread over more than one device.

**Summary of the invention**

It is an object of embodiments of the present invention to provide for a satellite communication system wherein the effect of a variation in power in a neighbouring carrier on the tracking in a receiver of the system is mitigated.

The above objective is accomplished by the solution according to the present invention.

In a first aspect the invention relates to a radio unit for a satellite communication system arranged for transmitting a waveform which bears data symbols on at least one carrier. The waveform is a non-slotted signal of at least 30 seconds. The radio unit is arranged for ramping up or down the power of the signal to be transmitted to a target power value according to a predefined power profile by adjusting at least one variable gain setting.

The proposed solution indeed allows for adapting the transmit power in a smooth way, so that the tracking at the receiver side is not substantially affected. This is achieved by providing in the transmission means a radio unit with the capability to ramp up and down the transmission power to a target power value according to a given power profile. The transmission means may be a single physical entity adapted for performing single carrier or multicarrier communication and of which the radio unit is a component. Alternatively, the transmitter may be a system comprising two or more physically separated sub-devices, one of which is the radio unit. The proposed solution clearly offers an advantage over the prior art solutions where the automatic gain control at the receiver side 'sees' a sudden variation of the received total power in a frequency band around the carrier under consideration when, for example, an adjacent carrier is enabled or disabled. Instead of looking for a solution to the problem at hand by modifying the automatic gain control, the inventors of the present invention propose providing the transmission means with the possibility to gradually increase/decrease their transmit power, thereby reducing the impact on other carriers.

It is an advantage of the invention that the radio unit and, hence the transmitter comprising the radio unit, can be applied in various types of handover scenarios, where the same technical problem may occur. This is especially relevant in new space scenarios such as active transponders and MEO where carriers come and go quickly. It is an advantage of the invention that the proposed approach can also be applied when the transmitter is built of two or more physically separated parts. It is an advantage of the invention that the operation of the automatic gain control at the receiver side remains as before and does not require any adaptation.

In one embodiment at least one of the variable gain values is implemented via an analog gain circuit. For example, a voltage-controlled amplifier can adjust the gain value $g_{RF}$. Alternatively, at least one of the variable gain values can be implemented via a digital gain circuit. This may be the case for the common digital gain $g_{DAC}$ for example. In some embodiment at least one variable gain value can be implemented by means of an analog gain circuit, while at least one other gain value is realised via a digital gain circuit.

In some embodiments the at least one variable gain comprises an integer part and a fractional part, whereby the integer part is implemented in the analog gain circuit and the fractional part in the digital gain circuit.

In preferred embodiments the waveform to be transmitted is arranged to bear data symbols on a plurality of carriers, the radio unit comprises a digital-to-analog conversion means to convert the carriers of said plurality and at least a second variable gain is adjusted. In this multicarrier scenario at least the second variable gain may be implemented via a digital gain circuit per carrier, for example, a circuit to adjust the gain value $g_i$ of carrier i. Alternatively, the at least the second variable gain may be implemented by scaling filter coefficients per carrier.

In advantageous embodiments the waveform lasts shorter than 1 day, preferably shorter than 1 hour and 30 minutes.

In embodiments of the invention the transmitter comprises computation means to calculate the at least one variable gain setting for intermediate power values to implement the predefined power profile to ramp up or down the power of the signal to be transmitted to the target power value. However, in some embodiments the computation means may be provided externally to the radio unit.

Advantageously, the predefined power profile is set by a parameter indicative of the adjustment speed of the intermediate power values.

In one embodiment the transmitter comprises a specific parameter setting the adjustment speed for ramping up or down to a first of the intermediate power values. It may be beneficial to give a different value to the adjustment speed.

In a preferred embodiment the predefined power profile uses at least 10 milliseconds to ramp up or ramp down the waveform power.

In another embodiment the at least two variable gain settings correspond to physically separated parts of the transmitter.

In one aspect the invention relates to a transmitter comprising a radio unit as described above. Advantageously, the transmitter comprises computation means, e.g. a processor, to compute the one or more variable gain values. In one embodiment the transmitter may be a remote modem wherein a digital-to-analog converter and the radio unit are integrated.

In preferred embodiments the transmitter further comprises at least one baseband modulator core. In some embodiments the radio unit and the at least one baseband modulator core are physically separated devices, whereas in other embodiments they may be integrated.

In advantageous embodiments the transmitter is arranged to perform the ramping up or down the power of said waveform to be transmitted to a target power value according to a predefined power profile by at least two baseband modulator cores being arranged for ramping up or down at least one variable gain per carrier to realise a power difference between different carriers and by ramping up or down at least one variable gain in said radio unit. The ramping up or down of the at least one variable gain per carrier and of the at least one variable gain in the radio unit preferably occurs in synch with the signal. More specifically, the adjustment in the radio unit comes shortly after the adjustment in the baseband modulator core, because the signal is first in the baseband modulator core and shortly after in the radio unit. The at least one variable gain in the radio unit is implemented via at least one of the analog gain circuit and the digital gain circuit of the radio unit. The at least one gain per carrier of the per carrier of the at least two baseband modulator cores is in some embodiments implemented via a digital gain circuit per carrier or by scaling filter coefficients per carrier in a baseband modulator core. Such a transmitter may be a hub in a satellite communication system.

In order to disable a carrier, the transmitter is advantageously arranged to first ramp down the power of that carrier to a lower target power value with a predetermined backoff before a zero target power value is configured. This instruction to perform this configuring may come from outside the transmitter. In one embodiment at least one of the baseband modulator cores is arranged to insert zero symbols into a pulse shaping filter before the zero target power value is configured.

In order to enable a carrier, the transmitter is preferably arranged to first ramp up the power of the carrier from a lower target power value to an initial target power value, whereby the lower target power value has a predetermined backoff to the initial power target value. At least one of the baseband modulator cores is then preferably arranged to insert zero symbols into a pulse shaping filter before configuring the lower target power value and to stop inserting the zero symbols before ramping up to the initial power target value.

In another aspect the invention relates to a satellite communication system comprising a transmitter as previously described.

In one embodiment the satellite communication system further comprising a receiver. The receiver comprises a band-pass filter and an automatic gain control and is arranged to receive a version of the transmitted waveform within a bandwidth set by the band-pass filter and to track with the automatic gain control the received version of the received version of the transmitted signal.

Advantageously, the satellite communication system is operable over low Earth orbit satellites and/or over medium Earth orbit satellites.

In some embodiments the satellite communication system comprises a further transmitter arranged for transmitting a further waveform at a transmit frequency different from the transmit frequency of said waveform.

In yet a further aspect the invention relates to a method for transmitting a waveform in a satellite communication system. The waveform is a non-slotted signal of at least 30 seconds, whereby the waveform power is ramped up or down to a target power value according to a predefined power profile.

In a preferred embodiment the ramping up is performed when transmission of the waveform starts and a further waveform is being transmitted at a carrier frequency different from the carrier frequency of the waveform. Advantageously, a power backoff is applied when the transmission of the waveform starts.

In another preferred embodiment the ramping down is performed when transmission of the waveform ends and a further waveform is being transmitted at a carrier frequency different from the carrier frequency of the waveform.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

## Brief description of the drawings

The invention will now be described further, by way of example, with reference to the accompanying drawings, wherein like reference numerals refer to like elements in the various figures.

Fig.1 illustrates a typical satellite two-way communication network.

Fig.2 illustrates a scheme of a multicarrier communication system.

Fig.3 illustrates a high-level block scheme of a receiver front end circuit.

Fig.4 depicts a set-up wherein the problem at hand can de demonstrated.

Fig.5 illustrates a block scheme to realise the smooth power control functionality in the transmitter.

Fig.6 illustrates an example of a possible evolution over time of the target power and actual power.

Fig.7 illustrates a flow chart wherein various embodiments of the invention are described.

## Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

A satellite communication system according to the present invention is in preferred embodiments a multicarrier digital communication system, although it can also be a single carrier system. Fig.2 is revisited to provide some further details on the system. Note that the multicarrier scheme of Fig.2 can readily be simplified to a single carrier scheme by reducing the number of carriers K to 1. It was already mentioned that there is typically a baseband modulator core per carrier, denoted a baseband single carrier modulator. However, this can be implemented differently in some embodiments, e.g. using a horizontally scalable design or reusing a same core for multiple carriers. Further, also with respect to the gain scaling, various implementations can be envisaged for achieving a difference in level between different carriers of the multicarrier system. Two exemplary options, without being limited thereto, are for instance applying the gain as shown in the block diagram of Fig.2 or, alternatively, applying other pulse shape filtering coefficients for each carrier to achieve a target level per carrier.

In this invention the transmitted waveforms are non-slotted with a duration of at least 30 seconds. E.g., for MEO orbits, the carrier from the hub to the MEO satellite typically lasts for 20 or 40 minutes until the MEO satellite is not in sight anymore or until a mid-pass handover occurs. In this way, the transmit signals considered in this disclosure clearly differentiate from, for example, conventional TDMA signals where slots in the order or milliseconds up to a few seconds are used.

The general scheme depicted in Fig.2 can be implemented in various ways. The reference signs (1), (2), (3), (4), ... in the figure refer to possible split locations where the signal can be transferred from one device to another device. In a single device implementation a single physical unit is provided comprising for example an FPGA where the baseband single carrier modulator cores, the digital per carrier gains and the common digital gain reside and comprising as well an analog stage on the same printed circuit board as the FPGA. In another embodiment, the single device comprises a CPU core performing multiple functions, after which the transmit signal is transferred with a digital interface protocol to for instance an FPGA interfacing further with a DAC and an analog stage to create the waveform.

In other embodiments one can opt for a multiple device implementation of the transmitter. The transmitter can in such case be seen as a transmitter system but this transmitter system is denoted a transmitter in the rest of this description. The processing can then be split over two or more devices in several ways, as described below. The transfer can be realized with a digital interface protocol, e.g. as standardized in (e)CPRI or DIFI.

The digital signal at location (1) in Fig.2, e.g. occupying 32 bits per sample, can be transferred to another device (for instance called a "digitizer" or radio unit as already described previously) which is hosting the DAC and quadrature modulator. In this case, the digital gains are applied on a different device than the device that takes care of applying the analog gain.

The digital multicarrier or single carrier transmit signal at location (2), e.g. occupying 32 bits per sample, can be transferred to another device (for instance called a "digitizer") which is hosting the DAC and quadrature modulator. In this case, a part of the digital gains (i.e. the $g_i$ gains) are applied on another device than where the analog gain and common digital gain are applied.

The digital single carrier transmit signal or signals (3) can be transferred (which is allowed and possible, also over a single Ethernet cable for instance, by means of standard digital interface protocols such as DIFI or (e)CPRI). In this case, all digital and analog gains in the block diagram of Fig.2 are applied in a single physical device again, but that device is not the same as the device wherein the single carrier transmit signals are created.

With reference to reference sign (4), instead of transferring a digital single carrier transmit signal, it can even be preferred to split the baseband single carrier modulator core processing over two or more devices, e.g. to transfer the coded bits and perform mapping from coded bits to I and Q symbols and the pulse shape filtering in another device, e.g. to lower the throughput over the digital interface (as the I and Q symbols occupy more bits than the coded bits).

The technical problem as sketched in the background section is in the present invention solved in the following way. Basically, in a single carrier system, the radio unit being part of a transmitter of a satellite communication system according to the invention is capable of ramping up or down the transmit waveform power, hence of achieving a smooth power variation in the transmit waveform according to a given profile. In an alternative embodiment, the baseband processing part of the transmitter is capable of ramping up or down the transmit waveform power. In a multicarrier system, the radio unit and the baseband processing, both part of a transmitter of a satellite communication system according to the invention are capable of ramping up or down the transmit waveform power, hence of achieving a smooth power variation in the transmit waveform according to a given profile. This can occur for example for any power change in a neighbouring carrier to avoid impact on the receiving of the carrier of interest or when the gain scaling is spread over different physical devices.

Assume a carrier is not enabled yet and needs to become enabled. This carrier is obviously adjacent to some other carrier in the spectrum (that is already enabled and on which a receiver is already locked) and can thus disturb that other carrier by suddenly lighting up. In the approach presented in this invention the carrier to be enabled starts from a transmit power value with a substantial power backoff to its desired power value (called target power) and then the carrier power gradually increases until said target power is reached. In case of disabling a carrier (again, this carrier is obviously adjacent to some other carrier in the spectrum), one starts from the current carrier power value and one then gradually decreases power instead of suddenly dropping the power. This smooth enabling and disabling can of course be extended to any desired or targeted power variation, e.g. from a first power to a second power. Hence, to achieve this smooth power variation of a transmitted waveform, the variable amplifier gains, i.e. one or more of the digital gains $g_i$ and $g_{dac}$ and/or the analog gain(s)

$g_{RF}$, as discussed with respect to Fig.2 are changed smoothly. A digital gain circuit can implement the gain $g_{dac}$ and an analog gain circuit takes care of the implementation of the analog gain(s) $g_{RF}$. For the implementation of the digital gains $g_i$ a digital gain circuit per carrier may be provided. In a multicarrier setting typically more than one gain value is adjusted. In a single carrier transmitter only the value of the analog gain is typically adjusted (as the digital level is always kept at its maximum level for reasons explained earlier). Radio units and transmitters comprising such a radio unit as a part of the satellite communication system of the invention are therefore given the capability of ramping up transmission waveform power according to a first predefined power profile when signal transmission starts and ramping down transmission waveform power according to a second predefined power profile when waveform transmission ends. This smooth enabling and disabling according to a first and second power profile can be extended to any smooth power variation, according to a particular power profile. The first and second and particular power profiles may be different. The ramping up or down is achieved by gradually adjusting one or more of said gains as detailed below. This gradual gain adjusting is denoted by smooth power control.

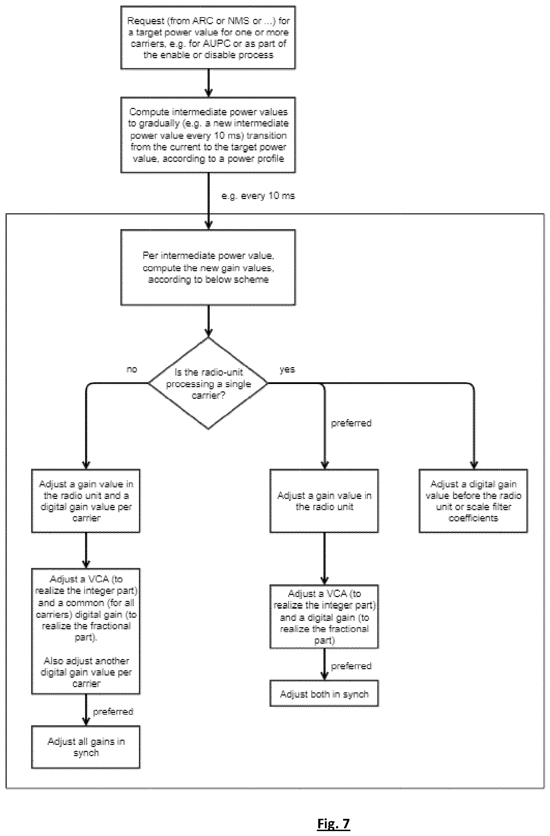

The gradual gain adjusting is typically realized by gradually reconfiguring the impacted gain values. The intermediate gain values to smoothly transition from a current gain value to a target gain value are typically computed in a software module comprising of a driver and a library. The target power values or the disabling or enabling of carriers is configuration information that is passed to that software which then computes the intermediate gain values. The configuration information is typically conveyed from the network management system (NMS) or User or Adaptive Resource Control (ARC) to the software by making use of Application Programming Interfaces (APIs). Reference is made to the top block in the flow chart of Fig.7. Components of that software like the library and the driver may be located in the transmitter or in a separate processor (e.g., located close to or in the NMS or hosted by the satellite or service provider). In other embodiments it can be implemented directly in the modulator on the FPGA where the gains are applied. The location where the library or driver are hosted is thus not essential for the invention and not limiting the invention.

A possible implementation of the solution is now described. There are many ways to implement the solution and the example is obviously not limiting the invention. The above-mentioned gains in the data path are configured. The gains can for instance be configured by a driver residing in the transmitter's software. E.g., the transmitter has a CPU to run that software. Alternatively, the software runs outside the transmitter but it can reach the data path reliably. The driver typically only knows how to configure the gains, e.g. by knowing which registers to configure in the FPGA and by knowing how to configure an FPGA register. For instance, it can configure the common gain $g_{dac}$ by calling a method setDacGain(). It may configure the gain value $g_{RF}$ by calling the method setVcaAttenuation(). It may configure the (real-valued) gains $g_i$ called mixer gains by calling the method setMixerGain(). It can further be chosen to change the gains "in sync", i.e., the gain settings may in preferred embodiments be configured in a synchronous way. More specifically, first the first gain in the data path is configured. The other gain values travel along with the signal at the same speed. When reaching the second gain, the second gain is reconfigured. This continues until the last gain is configured. This could be realized by first configuring the gains in a separate register, different from the gain registers. Then a method triggerPowerSync() could be called which copies the first gain configuration from the separate register to the gain first register and let a sync bit travel with the signal. When reaching the second gain, the second gain value is copied form the separate register to the second gain register. This continues until reaching the last gain value. Obviously, the above gain configuration can be extended to a data path that resides in software (e.g. in the cloud on a CPU). In that case, there may not be registers like in an FPGA.

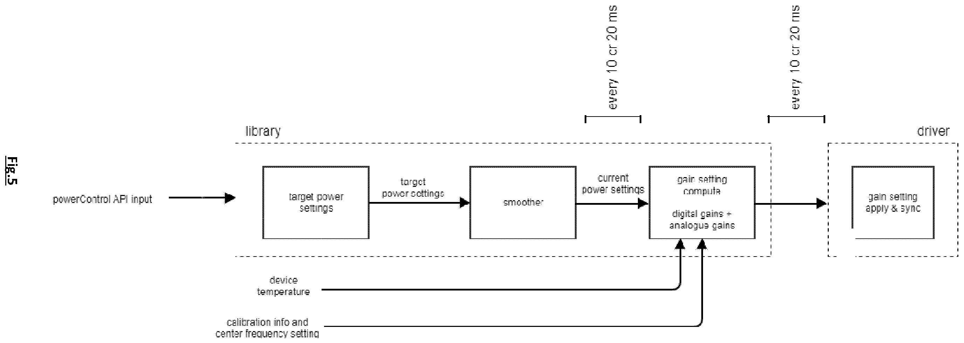

There is typically no application intelligence in the driver. So, the driver is not aware of the smooth power control functionality. The driver also does not know how all gains are related. This intelligence is typically implemented in a library, denoted here by the smooth power control library functionality. Consequently, that library can frequently (e.g., every 1 or 10 or 20 milliseconds, as indicated in the example illustrated in Fig.5) "instruct" the driver to reconfigure the gains. By doing that frequently, the gain changes can be kept minimal (e.g., in the order of 0.1 dB) to achieve the desired smooth gain variation in a short time (e.g., in 1 second). Alternatively, it could instruct the driver to frequently configure the gains from one start value to a target value with a certain step and amount of steps and time duration between each step. Alternatively, it could instruct the driver to instruct the FPGA to frequently change the gains from one start value to a target value with a certain step and amount of steps and time duration (e.g. a number of clock values on an FPGA) between each step. Alternatively, it could instruct the driver to instruct the FPGA to frequently change the gains from one start value to a target value with a certain step and amount of steps and time duration (e.g. a number of clock values on an FPGA) between each step.

The library gets several input parameters, denoted configuration information, to intelligently compute the power values (and gain values) at different time instances. E.g., the library gets power configuration information from the satellite operator (e.g. hosting the adaptive resource controller) or service provider or the NMS. E.g., the power can be zero when the carrier is disabled, or it can be nominal when it gets enabled, or it can increase in the case of an uplink fade, for example.

The library can also get device temperature and calibration info (which is typically frequency dependent, which implies that the centre frequency info of the carriers is of importance) to more accurately compute one or more of the required gain values for a given power to be achieved. This is also illustrated in Fig.5. The library in the transmitter receives this configuration information input through an Application Programming Interface (API).

Now is explained how the library computes the gain values that need to be frequently configured by the driver. The last block in the library is the one that can compute the different individual gains from a given power that needs to be achieved. This block is called "gain setting compute". It computes the digital and analog gains from a given power. Obviously, this block can also be part of the driver and the location of this block does not limit the invention. The last but one block in the library is called the "smoother". In this invention any power change of a carrier can be smoothed by gradually changing the current power value towards the target power. This is performed for all carriers. The output power of the transmitter is gradually reconfigured. The current power setting is then computed in the smoother operation and the values of current power for each carrier (one carrier in case of a single-carrier modulator and all carriers in the case of a multicarrier modulator) are passed to the last block, the "gain setting compute" block, which computes the digital and analog gains and instructs the driver to set them. One can for example have a smoothing operation per carrier or one smoother block for all carriers or any variant in between. More details on the smoother block are provided below.

Another implementation according to the invention is not to smooth the power changes and then compute the gains for each power value, but to directly smoothen the gain changes instead. Also the smoother can be located in the library or in the driver. This implementation detail does not limit the invention.

The mixer gains are computed by computing the total power first and then setting value for each transmitting carrier to

$$g_i = \mathrm{Nom}_{\mathrm{gi}} \sqrt{\frac{p_i}{p_{\mathrm{tot}}}},$$

where Pi is the power of only carrier i within the multicarrier complex-valued baseband waveform and $p_{\mathrm{tot}}$ is the total power of the multicarrier complex-valued baseband waveform (variable *totalPower*). $\mathrm{Nom}_{\mathrm{gi}}$ is the nominal gain, which can be for instance 0x8000 when $g_i$ is represented by a 16-bit value. The mixer gains for all non-transmitting carriers are set to zero. Having sufficient bits, e.g. 16 bits, for the per carrier gains is preferred. This also allows fine digital gain changes expected under smooth power control as claimed by the invention. The gain $g_{\mathrm{RF}}$ represents the analog VCAs and is computed from the total attenuation which is computed as follows:

$$a_{\mathrm{tot}}^{\mathrm{dB}} = p_{\mathrm{max}}^{\mathrm{dB}} - p_{\mathrm{tot}}^{\mathrm{dB}} - 20\log_{10}(4),$$

where $p_{\mathrm{max}}$ is the maximum available output power (a typical value is 18dBm), calibrated for temperature (which can be updated every 2s, for example). $20\log_{10}$ (4) is the backoff to avoid clipping acounting for the peak-to-average power ratio of the waveform, which represents roughly 12dB of power because of an amplitude reduction factor of 4. This attenuation is then split into two parts. The integer part $\lfloor a_{\mathrm{tot}}^{\mathrm{dB}} \rfloor$ is used to set the analog VCAs (represented by $g_{\mathrm{RF}}$). The fractional part, which is in the range of (-1,0]dB (as gain), is then added to the DAC gain $g_{\mathrm{DAC}}$. With the fractional gain written as $g_e^{\mathrm{dB}} = \lfloor a_{\mathrm{tot}}^{\mathrm{dB}} \rfloor - a_{\mathrm{tot}}^{\mathrm{dB}}$ the DAC gain is set to

$$g_{\mathrm{dac}} = \mathrm{Nom}_{\mathrm{gdac}} \times 10^{\frac{g_e^{\mathrm{dB}}}{20}},$$

where $\mathrm{Nom}_{\mathrm{gdac}}$ is the nominal gain.

Consider the following example. It is assumed that at $p_{\mathrm{max}}$ is 17.2dBm. $\mathrm{Nom}_{\mathrm{gi}}$ = 0x8000 and $\mathrm{Nom}_{\mathrm{gdac}}$ = 0x800/2. First, consider one carrier at -2 dBm.

(p_tot=-2, a_tot=7.1588, g_e=-0.1588)
Mixer gain g_0: 0x8000, all others zero
Dac gain g_dac: 0x3ed
VCA g_RF: -7 (dB)
Next consider two carriers each at -5 dBm.
(p_tot=-1.9897, a_tot=7.1485, g_e=-0.1485)
Mixer gains g_0 and g_1: 0x5a82, all others zero
Dac gain g_dac: 0x3ef
VCA g_RF: -7 (dB)
Next, consider a single carrier at -5 dBm (hence the second carrier at -5 dBm is disabled)
g_0 goes back to 0x8000, g_1 to 0 and VCA g_RF decreases to -10 (dB).
Fig.5 illustrates by means of a block scheme how the gradual change of the power is realised in the transmitter (more in particular, in the modulator part of the transmitter).

Now the smoother is revisited more in detail. As already mentioned, the smoother can smoothen power values or gain changes, which is equivalent and yields the same result. Consider the embodiment where the smoother smoothens power changes to determine intermediate power values to realize a gradual power change from the current power value to the target power value. The smoother receives a new target power value. In some embodiments, it may receive this input at once for all carriers (for example, if multicarrier communication is used). In other embodiments, it receives a target power value per carrier. One can for example have a smoothing operation per carrier or one smoother block for all carriers or any variant in between these two extremes. The smoothening can be carried out in multiple ways. E.g., in case of a log-power piecewise linear power profile the intermediate power values can be determined based on a configured so-called slew rate. Based on the intermediate power values, the corresponding gain values are computed to implement the smooth transition to the new target power. The smoothening is based on the target power setting and on the current power level, which is computed in the smoother block.

The actual power values, hence the intermediate power values during the power change, are sent from the smoother to the gain setting compute block, which computes the digital and analog gains.

The setting of the gain values may in preferred embodiments be performed in a synchronous way. The current power setting can so converge slowly (e.g. by reconfiguring the actual gains e.g. every 1 or 10 or 20 milliseconds, as indicated in the example illustrated in Fig.5) from the previous target power value to the new target power value. For example, the predefined power profile uses at least 10 milliseconds to ramp up or ramp down the waveform power in the case of 10 reconfigurations of the actual gains every 1 millisecond. E.g., in the case of transitioning from two carriers each at -5 dBm to a single carrier at -5 dBm this gradual change is achieved by increasing g_0 slowly from 0x5a82 to 0x8000, by decreasing g_1 slowly from 0x5a82 to 0, and by decreasing g_RF slowly from -7 to -10. The changes to g_0, g_1 and g_RF occur in a preferred embodiment as much as possible in synch with the signal. Specifically, the adjustment in the radio unit comes just after the adjustment in the baseband modulator core, because the signal is first in the baseband modulator core and shortly after in the radio unit.

The power increase or decrease applied during the process of gradually changing must be sufficiently granular. For the active link's demod an abrupt step of say 2dB in the wanted carrier would cause an initial 2dB error for demapping before FEC decoder. This can lead to frame loss for a high order constellation, as basically the wrong rings in the constellation are briefly paired. Also for single ring constellations, this will obviously lead to degradation and, depending on the link margin, to frame loss.

In some preferred embodiments device temperature and calibration info (which is typically frequency dependent, which implies that the centre frequency info of the carriers is of importance) is taken into account as well. This is also illustrated in Fig.5.

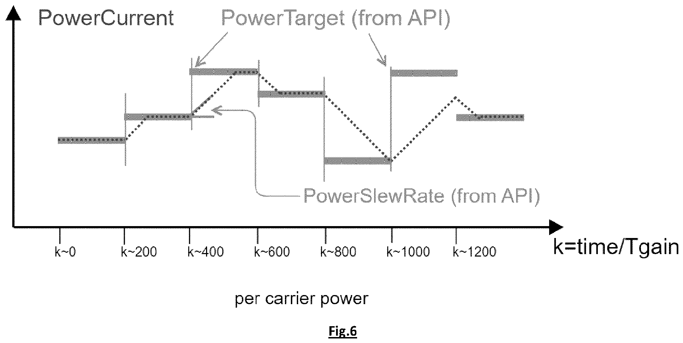

Fig.6 illustrates an example of how the target power and actual power may evolve over time. A log-power piecewise linear power profile is used in this example to transition smoothly from one target power to a next target power. Every $T_{gain}$ seconds, e.g. 10 milliseconds, the power is reconfigured when transitioning from one target power to a next target power. In the abscissa time is expressed in units of $T_{gain}$ using an index k, whereby $T_{gain}$ denotes the update period for the power reconfiguration by means of gains. As shown in the figure, every 200 $T_{gain}$ a new target power is configured through the API to the library in this example, which with e.g., $T_{gain}$ = 10 milliseconds, would mean every 2 seconds. It is emphasized that this is merely a non-limitative example. The new configured target power may in some embodiments be the result of a handover or of an automatic power control algorithm that is running on the side. The dotted lines in the figure show how the current power level aims to follow the changes in target power. The current power level is adjusted towards the new target power with an adjustment speed imposed by the API. The adjustment speed may be adaptive in some embodiments (see also below), while in other embodiments it remains fixed in absolute value so that (ascending or descending) changes of the intermediate power values always take place at the same speed.

In embodiments where the power profile is linear (like in Fig.6 where a log-power piecewise linear slope is expressed in dB per second), the adjustment speed corresponds to the slew rate. A "rate" concept such as slew rate cannot be easily generalized to non-linear power profiles. The present invention also includes such other power profiles. In the example depicted in Fig.6 the slew rate has a fixed absolute value, so the bigger the change in target power level, the longer it takes before the intermediate value of the actual power reaches that level. The range of slew rate may for example be [0, 20] dB/s. As can be seen at k = 1200, it may happen that the actual power has not yet reached the target power, when already a new target power value is specified. The actual power then aims to approximate this new target power value from the last actual power value.

From the explanations above it can already be understood that implementation of the approach presented in this description requires the introduction of at least a parameter indicative of the adjustment speed used to move from a current power value to the target power level. As explained above, the adjustment speed corresponds to the slew rate in case of a linear power profile. Further, optionally, a parameter may be used to account for the power backoff applied for the first target power when enabling a carrier. This parameter is hereinafter referred to as *'StartupLevelOffset'*. The range of *StartupLevelOffset* can be set for example [-30, 0] dB. A value from this range is chosen. For example, it can be 0 dB (which corresponds to not using this parameter) provided that the configuration information initially (i.e., when enabling a carrier) applies a low enough (in order not to disturb adjacent carriers) target power when enabling a carrier before further increasing (e.g. 2 seconds later) the target power for the same carrier. E.g. consider that the NMS provides the configuration information. In this case the NMS implicitly makes sure the carrier first transmits with a backed off power compared to the desired target power. It can also be for example -20 dB in the case the complexity of making sure the carrier first transmits with a backed off power is not brought up to the NMS but kept in the smoother only. In case the system only transmits narrow carriers, -10 dB may be enough, whereas if the system also transmits wide carriers, power backoffs down to -30 dB may be needed.

It is not always possible for the user or NMS or another process conveying the configuration information to provide an implicit backed off target power value. E.g., in the case of a redundancy switch-over (i.e., when the transmitter device has a failure somewhere internally and a backup or redundant device takes over its operation), the redundant device immediately applies the power level of the failed device. In that case using a *'StartupLevelOffset'* parameter (possibly next to a *'StartupLevelAdjSpeed',* see below) comes in handy to make sure the redundant device gently starts transmitting. This is however a further and completely optional optimization for a particular use case of redundancy switchover. Hence, this offset is added (hence, the negative values for the offset) to the initial target power value when a new carrier appears in the configuration. If adding the offset to the power value results in a PSD value that is below a minimally allowed PSD (which is a constant that is hard coded or can be configured), the power value resulting in the minimally allowed PSD may be used as the startup power value instead.

Another parameter, also optional, may be the *'StartupLevelAdjSpeed'*. This parameter allows that after the new carrier is added at an initial level equal to the sum of 'first' target power and the *StartupLevelOffset* parameter, the device immediately starts slewing towards the first target level at the rate *StartupLevelAdjSpeed.* The range of *StartupLevelAdjSpeed* may for example be [0, 20] dB/s. After the first target power level is reached, the behaviour becomes identical to the above-described behaviour and the adjustment speed will be used instead of the *StartupLevelAdjSpeed.* It may be required that the power ramp up in the case of a redundancy switchover be faster for instance than in the case of other power changes, hence the possibility to make *StartupLevelAdjSpeed* different from the default adjustment speed.

In embodiments with non-linear power profiles, more parameters than a single adjustment speed parameter (i.e., slew rate) may be needed to describe how the transition from the current power value towards the target power value should occur.

The target power and the adjustment speed for adapting the current power level to the target power level may be updated before previous target power level is reached. This was already explained previously with respect to the set-up depicted in Fig.6. The adjustment speed parameter (being the slew rate in the case of Fig.6) is specified as a dB/sec limit but is applied on a fine time scale, typically at a 10ms time tick by the smoother.

So configured powers received by the library through the API are interpreted as target powers. When a new transmit power is configured, it becomes the new target and the previous target value(s) become irrelevant.

As already mentioned, the smoothing operation can act on all carriers independently.

To switch off the carrier, the process sending commands through the API with target powers to the modulator first sends a lower target power. More specifically, in a particular embodiment, at a given time, e.g. 1 second or 2 seconds, before a carrier disappears, the target power of that carrier is incremented with *StartupLevelOffset* (so reduced, as *StartupLevelOffset* is negative). Said given time later, e.g. 1 second or 2 seconds, it can then be removed completely. A smooth transition towards zero power is so realized. The mentioned durations and offsets are obviously nonlimiting. Alternatively, additional parameters are provided to smoothly switch off a carrier, such as DisableLevelOffset and disableSlewRate. The same principles can be applied to disable a carrier then to enable it.

The invention as described applies to all of the above-mentioned implementation options (1) to (4). In options (1) and (2) not all of the involved gains that require adjustment in case of a power change of one carrier, are in a single device. This makes it more difficult to apply the changes in gain in a way as synchronized as possible. However, also in implementation options (1) and (2), the invention results in a significant advantage with respect to the prior art. By applying the changes in gains gradually (e.g., 0.1 dB at the time), the impact of a delay (e.g. a few milliseconds) between the analog and digital gain adjustments reduces significantly as, during that delay, the carrier's power will only be wrong by an order of magnitude of the gradual change (e.g., 0.1 dB), which will limit its impact on the performance significantly.

The system according to this invention is also beneficial in that it offers a solution to the problem of the physical layer being spread over different devices as mentioned in the background. Thanks to the gradual change in transmit power, the effect on the performance of having a waveform with wrong power value after a gain change on one device but before another gain change on the other device is substantially mitigated.

To avoid out of band spectrum glitches when enabling/disabling one or more carriers, it is preferred to first insert "zero symbols" (i.e., symbols with I and Q value equal to 0) in the transmit filter (also known as pulse shaping filter) of the correspondingly enabled/disabled carriers at the correct time. Consider for example disabling a carrier. First the power level is reduced according to the invention to a lower target power. Then, before applying the per carrier gain of 0 to disable a carrier, first "zero symbols" (i.e., symbols with I and Q value equal to 0) are inserted in the transmit filter. Consider the case of enabling a carrier. First, the gains are set to the first appropriate levels according to the invention (hence the target power reduced with the appropriate back-off) while zero symbols are still being processed by the transmit filter. After all gains are set according to a first low power, the symbol stream is passed. Then, the gains are slightly increased until reaching the levels corresponding to the target power.

Fig.7 presents in a flow chart a summary of the the most important use cases for the present invention. The first two blocks were already discussed previously. Here the blocks in the big rectangle in Fig.7 are briefly commented. For each intermediate power value used to gradually move towards the target power value, new, updated gain values are computed in line with the scheme depicted in Fig.7. If the radio unit is processing a multicarrier scheme, then the blocks on the left hand part of Fig.7 are carried out. If, on the contrary, a single carrier scheme is used, then the right hand part the scheme is executed.

In the case of a power variation of one or more carriers in a multicarrier scheme, a gain value is adjusted in the radio unit as well as a digital gain value per carrier as explained previously. The analog VCA is adjusted to realize the integer part and a digital gain common for all carriers is adjusted to realize the fractional part. Also the digital gain per carrier (the $g_i$) can be adjusted. As already mentioned, preferably all gain values are adjusted in synch with the signal.

In the case of a single carrier scheme, a gain values is adjusted in the radio unit of the transmitter. The analog VCA is adjusted to realize the integer part and a digital gain common for all carriers is adjusted to realize the fractional part. Again it is preferred to perform the adjustments synchronously. A digital gain value may be adjusted in the digital part preceding the radio unit, e.g. in a digital gain circuit per carrier or by scaling per carrier filter coefficients of the transmit filter.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Radio unit for a satellite communication system arranged for transmitting a waveform which bears data symbols on at least one carrier, said waveform being a non-slotted signal of at least 30 seconds, **characterised in that** said radio unit is arranged for ramping up or down the power of said waveform to be transmitted to a target power value according to a predefined power profile by adjusting at least one variable gain.

2. Radio unit as in claim 1, wherein at least one of said variable gains is implemented via an analog gain circuit.

3. Radio unit as in claim 1 or 2, wherein at least one of said variable gains is implemented via a digital gain circuit.

4. Radio unit as in claim 3, wherein said at least one variable gain comprises an integer part and a fractional part, said integer part being implemented in said analog gain circuit and said fractional part implemented in said digital gain circuit.

5. Radio unit as in any of the previous claims, wherein said waveform to be transmitted is arranged to bear data symbols on a plurality of carriers, wherein said radio unit comprises a digital-to-analog converter to convert said carriers of said plurality and wherein at least a second variable gain is adjusted.

6. Radio unit as in claim 5, wherein at least said second variable gain is implemented via a digital gain circuit per carrier.

7. Radio unit as in claim 5, wherein at least said second variable gain is implemented by scaling filter coefficients per carrier.

8. Radio unit as in any of the previous claims, comprising computation means to calculate said at least one variable gain for intermediate power values to implement said predefined power profile to ramp up or down said power of said signal to be transmitted to said target power value.

9. Radio unit as in claim 8, wherein said predefined power profile is set by a parameter indicative of the adjustment speed of said intermediate power values.

10. Radio unit as in any of the previous claims, wherein said predefined power profile uses at least 10 milliseconds to ramp up or ramp down said waveform power.

11. Transmitter comprising a radio unit as in any of the previous claims.

12. Transmitter as in claim 11, comprising computation means to calculate said at least one variable gain.

13. Transmitter as in claim 11 or 12, further comprising at least one baseband modulator core.

14. Transmitter as in claim 13, wherein said radio unit and said at least one baseband modulator core are physically separated devices.

15. Transmitter as in claim 13 or 14, arranged to perform said ramping up or down the power of said waveform to be transmitted to a target power value according to a predefined power profile by at least two baseband modulator cores being arranged for ramping up or down at least one variable gain per carrier to realise a power difference between different carriers and by ramping up or down at least one variable gain in said radio unit.

16. Transmitter as in claim 15, wherein said ramping up or down of said at least one variable gain per carrier and of said at least one variable gain in said radio unit occurs in synch with the signal.

17. Transmitter as in claim 15 or 16, wherein said at least one variable gain per carrier of said at least two baseband modulator cores is implemented via a digital gain circuit per carrier or by scaling filter coefficients per carrier.

18. Transmitter as in any of claims 11 to 17, wherein to disable a carrier, the transmitter is arranged to first ramp down the power of said carrier to a lower target power value with a predetermined backoff before a zero target power value is configured.

19. Transmitter as in any of claims 13 to 18, wherein at least one of said baseband modulator cores is arranged to insert zero symbols into a pulse shaping filter before said zero target power value is configured.

20. Transmitter as in any of claims 11 to 17, wherein to enable a carrier, the transmitter is arranged to first ramp up the power of said carrier from a lower target power value to an initial target power value, whereby said lower target power value has a predetermined backoff to said initial power target value.

21. Transmitter as in claim 20, wherein at least one of said baseband modulator cores is arranged to insert zero symbols into a pulse shaping filter before configuring said lower target power value and to stop inserting said zero symbols before ramping up to said initial power target value.

22. Satellite communication system comprising a transmitter as in any of claims 11 to 21, said transmitter being arranged to apply a power backoff when transmission starts.

23. Satellite communication system as in claim 22, further comprising a receiver, said receiver comprising a band-pass filter and an automatic gain control and arranged to receive a version of said transmitted waveform within a bandwidth set by said band-pass filter and to track with said automatic gain control said received version of said transmitted waveform.

24. Method for transmitting a waveform in a satellite communication system, said waveform being a non-slotted signal of at least 30 seconds, whereby the power of said waveform is ramped up or down to a target power value according to a predefined power profile.

25. Method as in claim 24, wherein said ramping down is performed when transmission of said waveform ends and a further waveform is being transmitted at a carrier frequency different from the carrier frequency of said waveform.

**Fig.1**

**Fig.2**

**Fig.3**

**Fig.4**

**Fig.5**

per carrier power

**Fig.6**

Request (from ARC or NMS or ...) for a target power value for one or more carriers, e.g. for AUPC or as part of the enable or disable process

Compute intermediate power values to gradually (e.g. a new intermediate power value every 10 ms) transition from the current to the target power value, according to a power profile

e.g. every 10 ms

Per intermediate power value, compute the new gain values, according to below scheme

Is the radio-unit processing a single carrier?

no

yes

preferred

Adjust a gain value in the radio unit and a digital gain value per carrier

Adjust a gain value in the radio unit

Adjust a digital gain value before the radio unit or scale filter coefficients

Adjust a VCA (to realize the integer part) and a common (for all carriers) digital gain (to realize the fractional part).

Also adjust another digital gain value per carrier

preferred

Adjust all gains in synch

Adjust a VCA (to realize the integer part) and a digital gain (to realize the fractional part)

preferred

Adjust both in synch

**Fig. 7**

Europäisches
Patentamt
European
Patent Office
Office européen
des brevets

# EUROPEAN SEARCH REPORT

**Application Number**

EP 24 18 9777

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 154 217 B1 (JAIN NITIN [US] ET AL) 6 October 2015 (2015-10-06) | 1-5,11, 13,14, 22-25 | INV. H04B7/185 |
| Y | * column 5, lines 54-63 * <br> * column 6, lines 13-18 * | 6-8,10, 12,16-21 | |
| A | * column 6, lines 23-33 * <br> * column 9, lines 7-10 * <br> * figure 3 * | 9,15 | |
| X | US 2004/235438 A1 (QUILISCH HAKAN [SE] ET AL) 25 November 2004 (2004-11-25) | 1,11,22, 24 | |
| A | * paragraphs [0002], [0005] * <br> * paragraphs [0023] - [0028] * <br> * paragraphs [0028], [0031] * <br> * figure 1 * | 2-10, 12-21, 23,25 | |
| Y | US 6 876 697 B2 (SIERRA WIRELESS INC [CA]) 5 April 2005 (2005-04-05) | 6,8,12, 16 | |
| A | * column 4, lines 34-51 * <br> * figure 2 * | 1-5,7, 9-11, 13-15, 17-25 | **TECHNICAL FIELDS SEARCHED (IPC)** <br> H04B |
| Y | US 2007/142007 A1 (YAN LIANG [TW]) 21 June 2007 (2007-06-21) | 7,10,17 | |
| A | * paragraph [0009] * <br> * figure 1 * | 1-6,8,9, 11-16, 18-25 | |

-/--

The present search report has been drawn up for all claims

| Place of search | Date of completion of the search | Examiner |
|---|---|---|
| The Hague | 14 January 2025 | Wijting, Carl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 24 18 9777

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ANONYMOUS ED - ANONYMOUS: "IEEE Standard for Local and Metropolitan Area Networks Part 16: Air Interface for Fixed Broadband Wireless Access Systems", 1 January 2004 (2004-01-01), IEEE STANDARD; [IEEE STANDARD], IEEE, PISCATAWAY, NJ, USA, PAGE(S) _1 - 857, XP017600973, ISBN: 978-0-7381-4070-4 | 18-21 | |
| A | * Section 8.2.1.6.2 *<br>* Section 8.2.1.6.3 *<br>----- | 1-17, 22-25 | |
| A | FEI XUE ET AL: "Further discussion on Tx RF requirements for NTN in Ka-band", 3GPP DRAFT; R4-2405640; TYPE OTHER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Changsha, Hunan Province, CN; 20240415 - 20240419 8 April 2024 (2024-04-08), XP052588821, Retrieved from the Internet: URL:https://www.3gpp.org/ftp/TSG_RAN/WG4_R adio/TSGR4_110bis/Docs/R4-2405640.zip R4-2405640 Discussion on VSAT Tx RF requirements for NTN Ka-band.docx [retrieved on 2024-04-08] * Section 2.1.3 *<br>----- | 1-25 | TECHNICAL FIELDS SEARCHED (IPC) |

-/--

The present search report has been drawn up for all claims

| Place of search | Date of completion of the search | Examiner |
|---|---|---|
| The Hague | 14 January 2025 | Wijting, Carl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

EP 24 18 9777

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QUALCOMM INCORPORATED: "Transient time impact ON OFF time mask", 3GPP DRAFT; R4-1703046, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Spokane, WA, USA; 20170403 - 20170407 3 April 2017 (2017-04-03), XP051246276, Retrieved from the Internet: URL:http://www.3gpp.org/ftp/Meetings_3GPP_SYNC/RAN4/Docs/ [retrieved on 2017-04-03] * Section 2 * ----- | 1-25 | |
| | | | TECHNICAL FIELDS SEARCHED (IPC) |

The present search report has been drawn up for all claims

| Place of search | Date of completion of the search | Examiner |
|---|---|---|
| The Hague | 14 January 2025 | Wijting, Carl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 9777

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2025

| Patent document cited in search report | | | Publication date | Patent family member(s) | | Publication date |
|---|---|---|---|---|---|---|
| US 9154217 | B1 | | 06-10-2015 | NONE | | |
| US 2004235438 | A1 | | 25-11-2004 | NONE | | |
| US 6876697 | B2 | | 05-04-2005 | AU | 1488202 A | 24-06-2002 |
| | | | | CN | 1479971 A | 03-03-2004 |
| | | | | EP | 1352479 A2 | 15-10-2003 |
| | | | | US | 2002071482 A1 | 13-06-2002 |
| | | | | WO | 0249220 A2 | 20-06-2002 |
| US 2007142007 | A1 | | 21-06-2007 | CN | 1983854 A | 20-06-2007 |
| | | | | TW | I324462 B | 01-05-2010 |
| | | | | US | 2007142007 A1 | 21-06-2007 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 9490764 B2